# EUROPÄISCHE PATENTSCHRIFT

(11) **EP 2 523 826 B1**
(45) Veröffentlichungstag und Bekanntmachung des Hinweises auf die Patenterteilung: **13.11.2013**
(21) Anmeldenummer: 11700743.5
(22) Anmeldetag: 14.01.2011
(51) Int. Cl.: B60N 2/36, B60N 2/30

(54) **FAHRZEUGSITZ MIT BEWEGLICHEM LEHNENTEIL**
VEHICLE SEAT WITH MOVABLE SEATBACK
SIEGE DE VEHICULE AVEC DOSSIER MOBILE

(30) Priorität: 14.01.2010 DE 102010004742
(43) Veröffentlichungstag der Anmeldung: 21.11.2012
(73) Patentinhaber: Johnson Controls GmbH, 51399 Burscheid (DE); Bayerische Motoren Werke Aktiengesellschaft, 80809 München (DE)
(72) Erfinder: DILSEN, Michael, 41849 Wassenberg (DE); HEINRICH, Jens, 42719 Solingen (DE); LENEIS, Thomas, 85669 Reithofen (DE)
(74) Vertreter: Liedtke, Markus
(86) Internationale Anmeldenummer: PCT/EP2011/050478
(87) Internationale Veröffentlichungsnummer: WO 2011/086165

(56) Entgegenhaltungen:
- DE-A1- 1 914 154
- DE-A1-102004 062 944
- DE-B3-102006 004 531
- DE-B3-102006 051 270
- US-A- 3 361 474

## Beschreibung

Die vorliegende Erfindung betrifft einen Fahrzeugsitz, insbesondere einen Kraftfahrzeugsitz mit einstellbarer Rückenlehne gemäß dem Oberbegriff des Anspruchs 1.

Fahrzeugsitze der gattungsgemäßen Art sind aus dem Stand der Technik bekannt. Beispielsweise werden die Lehnen der ersten Sitzreihe zur Erleichterung des Zugangs der Passagiere zu den dahinter angeordneten Sitzen entriegelt und nach vorne geklappt. Weiterhin ist bekannt, eine Rücksitzlehne zum Sitzteil hin umzuklappen, um so einen vergrößerten Laderaum zu erhalten. Die Rücksitzlehne ist häufig noch in beispielsweise 2/3 zu 1/3 geteilt ausgeführt, um eine größere Variabilität bei der Nutzung des Laderaums zu erreichen. Um die Vorklappbewegung der Lehne direkt nach ihrer Entriegelung einzuleiten und zu unterstützen, befindet sich oft ein Energiespeicher, wie z.B. ein Federmittel an der Lehnenstruktur, welches sich mit einem ersten Ende an der Lehnenstruktur und mit einem zweiten Ende an der Sitzteilstruktur oder der Fahrzeugkarosserie abstützt. Sofern sich das Federmittel z.B. aus optischen Gründen oder weil der vorhandene Bauraum es nicht anders zulässt, nicht sichtbar innerhalb der Lehnenstruktur befindet, also zwischen der Lehnenschale und dem Polster, muss bei einer Anbindung des Sitzes an einem an der Karosserie befestigten Lager das Federmittel aus dem Polster und dem Sitzbezug heraus geführt werden, was die Anmutung des Fahrzeugsitzes allgemein herabsetzt.

Die DE 10 2006 051 270 beschreibt einen Fahrzeugsitz, insbesondere Kraftfahrzeugsitz, mit zwei Lehnen, die mittels je eines äußeren Drehlagers und wenigstens eines mittleren Drehlagers an einer Struktur angelenkt sind, wodurch eine Lehnenschwenkachse definiert ist, und die jeweils relativ zur Struktur von einer Gebrauchsstellung in eine Nichtgebrauchsstellung schwenkbar sind, spannt am mittleren Drehlager eine gemeinsame Feder die beiden Lehnen zur Nichtgebrauchsstellung hin vor, wobei die Feder mit je einem Schenkelabschnitt eine der beiden Lehnen beaufschlagt und mit einem Mittelabschnitt strukturfest abgestützt ist.

Der Erfindung liegt die Aufgabe zugrunde, einen verbesserten, insbesondere sicheren und leichter bedienbaren Fahrzeugsitz anzugeben.

Die Aufgabe wird erfindungsgemäß mit einem Fahrzeugsitz gelöst, welcher die im Anspruch 1 angegebenen Merkmale aufweist.

Vorteilhafte Ausgestaltungen der Erfindung sind Gegenstand der Unteransprüche.

Beim Fahrzeugsitz mit einem Sitzteil und mit zumindest zwei relativ zum Sitzteil um eine Drehachse schwenkbaren Lehnenteilen und mit einem zwischen dem Sitzteil und dem Lehnenteil wirksamen Federmittel, wobei das Lehnenteil zumindest eine Lehnenrückwand, eine Lehnenpolsterung und einen Lehnenbezug umfasst, ist erfindungsgemäß jeweils ein als Torsionsfeder ausgebildetes Federmittel vollständig innerhalb des entsprechenden Lehnenteils angeordnet, mit seinem ersten Ende an der Lehnenrückwand (21) befestigt und wirkt mit seinem dem ersten Ende gegenüberliegenden zweiten Ende auf ein Zwischenstück oder einen Anschlag des Zwischenstücks ein, wobei das Zwischenstück auf der Drehachse angeordnet und gestellfest an einem Lager befestigt ist. Somit ist das Federmittel vollständig von der Lehnenpolsterung und/oder dem Lehnenbezug bedeckt, wodurch eine Verletzungsgefahr für den Fahrzeugnutzer verringert ist. Besonders vorteilhafterweise ist eine optische Anmutung des Fahrzeugsitzes verbessert.

In einer Ausführungsform ist das Federmittel mittels zumindest einer Lagerstelle drehbeweglich an der Lehnenrückwand befestigt. Dadurch ist das Federmittel betriebssicher an der Lehnenrückwand gehalten und kann bestimmungsgemäß auf Torsion beansprucht werden.

In einer weiteren Ausführungsform wirkt ein erstes Ende des Federmittels mittels der ersten, gestellfest an der Lehnenrückwand angeordneten Lagerstelle auf das Lehnenteil ein. Somit kann eine Bewegung des Lehnenteils durch die Krafteinwirkung des Federmittels unterstützt werden oder eine Position des Lehnenteils kann durch die Krafteinwirkung des Federmittels gehalten werden.

Vorteilhafterweise ist das Federmittel an seinen von der Lehnenrückwand wegweisenden Seiten von der Lehnenpolsterung und/oder dem Lehnenbezug bedeckt. Somit ist das Federmittel verdeckt in der Lehnenrückwand angeordnet und kann optisch und haptisch vom Fahrzeugnutzer nicht wahrgenommen werden.

Besonders vorteilhafterweise ist das Zwischenstück zumindest abschnittsweise innerhalb des Lehnenteils angeordnet, wobei zumindest ein erster Flansch des Zwischenstücks mit den daran angeordneten Anschlägen innerhalb des Lehnenteils angeordnet ist. Dadurch sind innerhalb des Lehnenteils und somit verdeckt angeordnete gestellfeste Anschläge für das Federmittel ermöglicht.

In einer vorteilhaften Ausführungsform ist ein zweiter Flansch des Zwischenstücks im Wesentlichen parallel zum ersten Flansch angeordnet und mittels eines Verbindungsteils zu diesem beabstandet. Somit ist zwischen dem ersten und dem zweiten Flansch eine torsionssteife Verbindung geschaffen.

In einer weiteren vorteilhaften Ausführungsform sind am zweiten Flansch des Zwischenstücks mehrere Laschen angeordnet, welche Kanten des Lagers formschlüssig umgreifen. Auf diese Weise ist eine gestellfeste, insbesondere verdrehsichere Kopplung des Zwischenstücks mit dem Lager ermöglicht, welches gestellfest an einer Fahrzeugkarosserie angeordnet ist.

In einer besonders vorteilhaften Ausführungsform ist das Zwischenstück mittels eines axial angeordneten Verbindungsmittels mit dem Lager gekoppelt. Dadurch ist das Zwischenstück in axialer Richtung sicher am Lager gehalten.

Ein erster Anschlag des Zwischenstücks wirkt in einer Gebrauchsposition des Lehnenteils auf das Federmittel ein, so dass selbiges vorgespannt ist. Somit kann das Lehnenteil beim Lösen einer Lehnenverriegelung selbsttätig, von der Schwerkraft und der Federwirkung des Federmittels unterstützt in eine Stauposition umklappen oder schwenken.

Ein zweiter Anschlag des Zwischenstücks wirkt in einer Stauposition des Lehnenteils auf das Federmittel ein, so dass selbiges vorgespannt ist. Dadurch sind Knarz- und/oder Klappergeräusche des in die Stauposition geschwenkten Lehnenteils sicher vermieden.

Ausführungsbeispiele der Erfindung werden im Folgenden anhand von Zeichnungen näher erläutert.

Dabei zeigen:
- Fig. 1: schematisch eine Rücksitzbank mit einer geteilten Rücksitzlehne in perspektivischer Ansicht,
- Fig. 2: schematisch einen Ausschnitt eines Lehnenteils gemäß einer Rücksitzlehne aus Fig. 1 im Bereich einer Lehnenschwenkachse und

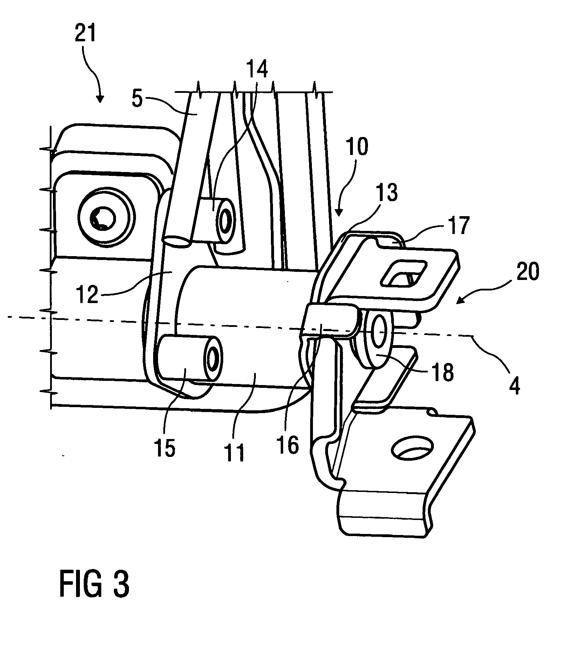

- Fig. 3: schematisch einen vergrößerten Ausschnitt der außenliegenden Lagerung aus der Fig. 2 in perspektivischer Ansicht.

Der Fahrzeugsitz 1 besteht aus einem Sitzteil 2 und aus einem ersten Lehnenteil 3.1 und einem zweiten Lehnenteil 3.2, die einzeln oder gemeinsam relativ gegenüber dem Sitzteil 2 in einer ersten Schwenkbewegung von einer ersten Gebrauchsposition in eine zweite Stauposition reversibel um die Drehachse 4 in Fahrtrichtung nach vorne zum Sitzteil 2 hin verschwenkbar sind.

In einer nicht dargestellten Ausführungsvariante kann einem jeden Sitzteil 2 ein Lehnenteil 3.1 zugeordnet sein.

Bei einer anderen Ausführung ist es darüber hinaus auch denkbar, das Lehnenteil 3.1 und/oder 3.2 in einer zweiten Schwenkbewegung reversibel um die Drehachse 4 nach hinten vom Sitzteil 2 weg gerichtet in eine dritte Ruheposition zu verlagern.

Die Lehnenteile 3.1 und 3.2 sind zumindest aus einer Lehnenrückwand 21 und einer auf dieser angeordneten, nicht dargestellten Lehnenpolsterung und einem die Lehnenpolsterung bedeckenden Lehnenbezug gebildet.

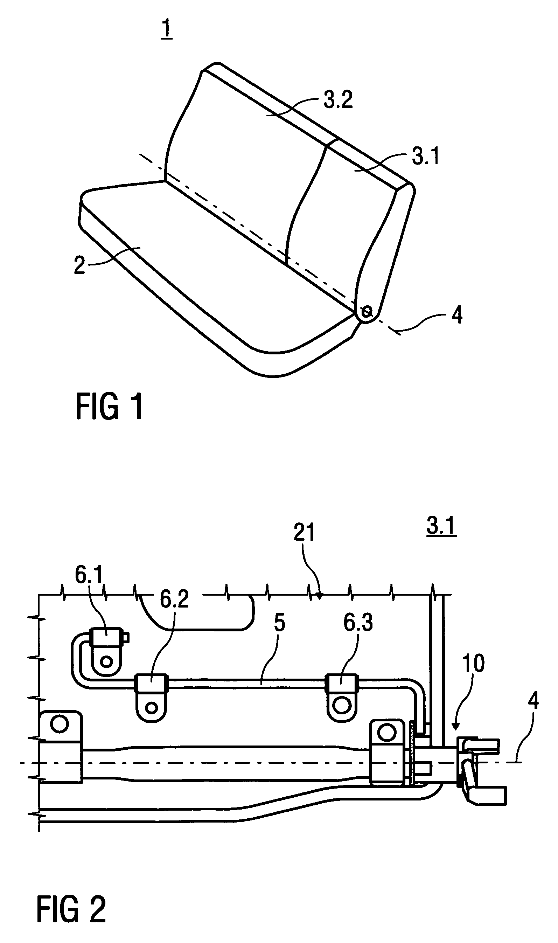

Wie beispielhaft in Fig. 2 dargestellt, ist an der Lehnenrückwand 21 des ersten Lehnenteils 3.1 ein Federmittel 5, wie z.B. die dargestellte Torsionsfeder an mehreren Lagerstellen 6.1, 6.2, 6.3 drehbeweglich befestigt. Dabei ist das erste Ende des Federmittels 5 drehbeweglich in der Lagerstelle 6.1 gehalten und gestellfest mit der Lehnenrückwand 21 gekoppelt. Das zweite Ende des Federmittels 5 wirkt in noch näher auszuführender Weise gegen einen ersten Anschlag 14, der sich auf einem ersten Flansch 12 eines Zwischenstücks 10 befindet. Dieses Zwischenstück 10 ist über den zweiten Flansch 13, der durch ein Verbindungsteil 11 beabstandet, im Wesentlichen parallel zum ersten Flansch 12 angeordnet ist, an einem fest mit der Karosserie verbundenen Lager 20 gehalten.

Das Federmittel 5 ist an seinen von der Lehnenrückwand 21 wegweisenden Seiten von der Lehnenpolsterung und/oder dem Lehnenbezug bedeckt und/oder umgeben und somit vollständig innerhalb des ersten Lehnenteils 3.1 angeordnet.

Das Zwischenstück 10 ist zumindest abschnittsweise innerhalb des Lehnenteils 3.1 angeordnet. Beispielweise ist zumindest der erste Flansch 12 des Zwischenstücks 10 mit den daran angeordneten Anschlägen 14 und 15 innerhalb des Lehnenteils 3.1 angeordnet und von der Lehnenpolsterung und/oder dem Lehnenbezug bedeckt.

Am zweiten Flansch 13 des Zwischenstücks 10 sind mehrere Laschen 16 und 17 angeordnet, welche sich formschlüssig um Kanten des Lagers 20 legen und somit eine Drehbewegung des Zwischenstücks 10 um die Drehachse 4 verhindern.

Ein Verbindungsmittel 18 sichert das Zwischenstück 10 axial gegen das Lager 20. Das Verbindungsmittel 18 ist beispielweise als herkömmliche Schraube ausgebildet und die Verbindung zwischen dem Lager 20 und dem Zwischenstück 10 ist lösbar.

Bevor das Lehnenteil 3.1 montiert wird, ist das Federmittel 5 spannungsfrei und das Lehnenteil 3.1 kann einfach in Bezug zur Drehachse 4 und zum Sitzteil 2 positioniert werden. Das Zwischenstück 10, welches im Ausführungsbeispiel als Steckadapter ausgeführt ist, ermöglicht die leichte Posititionierung und Montage des Lagers 20 an der Fahrzeugkarosserie. Insbesondere ist das Lager 20 auf diese Weise spannungsfrei an der Fahrzeugkarosserie positionierbar und montierbar. Erst durch die Verlagerung des Lehnenteils 3.1 in die erste Gebrauchsposition wird das Federmittel 5 mit seinem zweiten Ende gegen den ersten Anschlag 14 gepresst und somit vorgespannt.

Wird nun die nicht dargestellte Lehnenverriegelung gelöst, bewegt sich das Lehnenteil 3.1 selbsttätig, d.h. ohne einen Kraftaufwand seitens des Fahrzeugnutzers, angetrieben durch die Vorspannung des Federmittels 5 und die Schwerkraft für eine bestimmte Teilstrecke von der ersten Gebrauchsposition in Richtung der zweiten Stauposition bis sich das Federmittel 5 entspannt hat.

In einer weiteren Ausführungsform kann sich am ersten Flansch 12 ein weiterer Anschlag 15 befinden. Wird hierbei die Schwenkbewegung des Lehnenteils 3.1 um die Drehachse 4 in die zweite Stauposition weitergeführt, kommt das zweite Ende des Federmittels 5 kurz vor Erreichen der zweiten Stauposition mit dem Anschlag 15 in Kontakt und wird dabei leicht vorgespannt, jedoch diesmal in der entgegengesetzten Richtung. Das bewirkt eine Vermeidung oder zumindest Verminderung möglicher Störgeräusche wie z.B. Klappern und/oder Knarzen durch das andernfalls lose Federmittel 5.

Die Verwendung eines Zwischenstücks 10, bevorzugt ausgebildet als Steckadapter, ermöglicht somit in vorteilhafter Weise die Anordnung des Federmittels 5 innerhalb der Struktur der Lehnenteile 3.1 und 3.2, ohne dass die betreffende Lehnenpolsterung und/oder der Lehnenbezug vom Federmittel 5 durchbrochen werden muss.

### Bezugszeichenliste

- 1: Fahrzeugsitz
- 2: Sitzteil
- 3.1: erstes Lehnenteil
- 3.2: zweites Lehnenteil
- 4: Drehachse
- 5: Federmittel
- 6.1: Lagerstelle
- 6.2: Lagerstelle
- 6.3: Lagerstelle
- 10: Zwischenstück
- 11: Verbindungsteil
- 12: erster Flansch
- 13: zweiter Flansch
- 14: erster Anschlag
- 15: zweiter Anschlag
- 16: Lasche
- 17: Lasche
- 18: Verbindungsmittel
- 20: Lager
- 21: Lehnenrückwand

## Patentansprüche

1. Fahrzeugsitz (1) mit einem Sitzteil (2) und mit zumindest zwei relativ zum Sitzteil (2) um eine Drehachse (4) schwenkbaren Lehnenteilen (3.1, 3.2) und mit einem zwischen dem Sitzteil (2) und dem jeweiligen Lehnenteil (3.1, 3.2) wirksamen Federmittel (5), wobei das Lehnenteil (3.1, 3.2) zumindest eine Lehnenrückwand (21), eine Lehnenpolsterung und einen Lehnenbezug umfasst,
**dadurch gekennzeichnet, dass** jeweils ein als Torsionsfeder ausgebildetes Federmittel (5) vollständig innerhalb des entsprechenden Lehnenteils (3.1, 3.2) angeordnet ist, mit seinem ersten Ende an der Lehnenrückwand (21) befestigt ist und mit seinem dem ersten Ende gegenüberliegenden zweiten Ende auf ein Zwischenstück (10) oder einen Anschlag (14, 15) des Zwischenstücks (10) einwirkt, wobei das Zwischenstück (10) auf der Drehachse (4) angeordnet und gestellfest an einem Lager (20) befestigt ist.

2. Fahrzeugsitz (1) nach Anspruch 1,
**dadurch gekennzeichnet, dass** das Federmittel (5) mittels zumindest einer Lagerstelle (6.1, 6.2, 6.3) drehbeweglich an der Lehnenrückwand (21) befestigt ist.

3. Fahrzeugsitz (1) nach Anspruch 1 oder 2,
**dadurch gekennzeichnet, dass** ein erstes Ende des Federmittels (5) mittels der ersten, gestellfest an der Lehnenrückwand (21) angeordneten Lagerstelle (6.1) auf das Lehnenteil (3.1, 3.2) einwirkt.

4. Fahrzeugsitz (1) nach einem der vorherigen Ansprüche,
**dadurch gekennzeichnet, dass** das Federmittel (5) an seinen von der Lehnenrückwand (21) wegweisenden Seiten von der Lehnenpolsterung und/oder dem Lehnenbezug bedeckt und/oder umgeben ist.

5. Fahrzeugsitz (1) nach einem der vorherigen Ansprüche,
**dadurch gekennzeichnet, dass** das Zwischenstück (10) zumindest abschnittsweise innerhalb des Lehnenteils (3.1, 3.2) angeordnet ist, wobei zumindest ein erster Flansch (12) des Zwischenstücks (10) mit den daran angeordneten Anschlägen (14, 15) innerhalb des Lehnenteils (3.1, 3.2) angeordnet ist.

6. Fahrzeugsitz (1) nach Anspruch 5,
**dadurch gekennzeichnet, dass** ein zweiter Flansch (13) des Zwischenstücks (10) im Wesentlichen parallel zum ersten Flansch (12) angeordnet und mittels eines Verbindungsteils (11) zu diesem beabstandet ist.

7. Fahrzeugsitz (1) nach Anspruch 6,
**dadurch gekennzeichnet, dass** am zweiten Flansch (13) des Zwischenstücks (10) mehrere Laschen (16, 17) angeordnet sind, welche Kanten des Lagers (20) formschlüssig umgreifen.

8. Fahrzeugsitz (1) nach einem der vorherigen Ansprüche,
**dadurch gekennzeichnet, dass** das Zwischenstück (10) mittels eines axial angeordneten Verbindungsmittels (18) mit dem Lager (20) gekoppelt ist.

9. Fahrzeugsitz (1) nach einem der vorherigen Ansprüche,
**dadurch gekennzeichnet, dass** ein erster Anschlag (14) in einer Gebrauchsposition des Lehnenteils (3.1, 3.2) auf das Federmittel (5) einwirkt, so dass selbiges vorgespannt ist.

10. Fahrzeugsitz (1) nach Anspruch 9,
**dadurch gekennzeichnet, dass** ein zweiter Anschlag (15) in einer Stauposition des Lehnenteils (3.1, 3.2) auf das Federmittel (5) einwirkt, so dass selbiges vorgespannt ist.

## Claims

1. Vehicle seat (1) having a seat part (2) and having at least two backrest parts (3.1, 3.2) which are pivotable about an axis of rotation (4) relative to the seat part (2), and having a spring means (5) which is effective between the seat part (2) and the respective backrest part (3.1, 3.2), wherein the backrest part (3.1, 3.2) comprises at least a backrest rear wall (21), backrest upholstery and a backrest cover, **characterized in that** a spring means (5) designed as a torsion spring is in each case arranged completely within the corresponding backrest part (3.1, 3.2), is fastened at the first end thereof on the backrest rear wall (21) and acts at the second end thereof opposite the first end on an intermediate piece (10) or on a stop (14, 15) of the intermediate piece (10), wherein the intermediate piece (10) is arranged on the axis of rotation (4) and is fastened to a bearing (20) in a manner fixed relative to the frame.

2. Vehicle seat (1) according to Claim 1, **characterized in that** the spring means (5) is fastened rotatably to the backrest rear wall (21) by means of at least one bearing point (6.1, 6.2, 6.3).

3. Vehicle seat (1) according to Claim 1 or 2, **characterized in that** a first end of the spring means (5) acts on the backrest part (3.1, 3.2) by means of the first bearing point (6.1) which is arranged on the backrest rear wall (21) in a manner fixed relative to the frame.

4. Vehicle seat (1) according to one of the preceding claims, **characterized in that** those sides of the spring means (5) which face away from the backrest rear wall (21) are covered and/or surrounded by the backrest upholstery and/or the backrest cover.

5. Vehicle seat (1) according to one of the preceding claims, **characterized in that** the intermediate piece (10) is at least partially arranged within the backrest part (3.1, 3.2), wherein at least a first flange (12) of the intermediate piece (10) with the stops (14, 15) arranged thereon is arranged within the backrest part (3.1, 3.2).

6. Vehicle seat (1) according to Claim 5, **characterized in that** a second flange (13) of the intermediate piece (10) is arranged substantially parallel to the first flange (12) and is spaced apart therefrom by means of a connecting part (11).

7. Vehicle seat (1) according to Claim 6, **characterized in that** a plurality of tabs (16, 17) are arranged on the second flange (13) of the intermediate piece (10), the tabs engaging in a form-fitting manner around edges of the bearing (20).

8. Vehicle seat (1) according to one of the preceding claims, **characterized in that** the intermediate piece (10) is coupled to the bearing (20) by means of an axially arranged connecting means (18).

9. Vehicle seat (1) according to one of the preceding claims, **characterized in that**, in a use position of the backrest part (3.1, 3.2), a first stop (14) acts on the spring means (5) such that same is prestressed.

10. Vehicle seat (1) according to Claim 9, **characterized in that**, in a storage position of the backrest part (3.1, 3.2), a second stop (15) acts on the spring means (5) such that same is prestressed.

## Revendications

1. Siège de véhicule (1) comprenant une partie de siège (2) et au moins deux parties de dossier (3.1, 3.2) pouvant pivoter par rapport à la partie de siège (2) autour d'un axe de rotation (4) et un moyen de ressort (5) agissant entre la partie de siège (2) et la partie de dossier respective (3.1, 3.2), la partie de dossier (3.1, 3.2) comprenant au moins une paroi arrière de dossier (21), un rembourrage de dossier et un revêtement de dossier, **caractérisé en ce qu'**un moyen de ressort respectif (5) réalisé sous forme de ressort de torsion est disposé complètement à l'intérieur de la partie de dossier correspondante (3.1, 3.2), est fixé par sa première extrémité à la paroi arrière de dossier (21) et agit par sa deuxième extrémité opposée à la première extrémité sur une pièce intermédiaire (10) ou sur une butée (14, 15) de la pièce intermédiaire (10), la pièce intermédiaire (10) étant disposée sur l'axe de rotation (4) et étant fixée sur un palier (20) de manière fixée au bâti.

2. Siège de véhicule (1) selon la revendication 1, **caractérisé en ce que** le moyen de ressort (5) est fixé de manière mobile en rotation sur la paroi arrière de dossier (21) au moyen d'au moins un point de palier (6.1, 6.2, 6.3).

3. Siège de véhicule (1) selon la revendication 1 ou 2,
**caractérisé en ce qu'**une première extrémité du moyen de ressort (5) agit sur la partie de dossier (3.1, 3.2) au moyen du premier point de palier (6.1) disposé sur la paroi arrière de dossier (21) de manière fixée au bâti.

4. Siège de véhicule (1) selon l'une quelconque des revendications précédentes,
**caractérisé en ce que** le moyen de ressort (5), sur ses côtés opposés à la paroi arrière de dossier (21), est recouvert et/ou entouré par le rembourrage de dossier et/ou par le revêtement de dossier.

5. Siège de véhicule (1) selon l'une quelconque des revendications précédentes,
**caractérisé en ce que** la pièce intermédiaire (10) est disposée au moins en partie à l'intérieur de la partie de dossier (3.1, 3.2), au moins une première bride (12) de la pièce intermédiaire (10) avec les butées (14, 15) disposées sur celle-ci étant disposée à l'intérieur de la partie de dossier (3.1, 3.2).

6. Siège de véhicule (1) selon la revendication 5,
**caractérisé en ce qu'**une deuxième bride (13) de la pièce intermédiaire (10) est disposée essentiellement parallèlement à la première bride (12) et est espacée de celle-ci au moyen d'une partie de connexion (11).

7. Siège de véhicule (1) selon la revendication 6,
**caractérisé en ce que** plusieurs pattes (16, 17) sont disposées sur la deuxième bride (13) de la pièce intermédiaire (10), lesquelles viennent en prise par engagement positif autour d'arêtes du palier (20).

8. Siège de véhicule (1) selon l'une quelconque des revendications précédentes,
**caractérisé en ce que** la pièce intermédiaire (10) est accouplée au palier (20) au moyen d'un moyen de connexion (18) disposé axialement.

9. Siège de véhicule (1) selon l'une quelconque des revendications précédentes,
**caractérisé en ce qu'**une première butée (14) agit dans une position d'utilisation de la partie de dossier (3.1, 3.2) sur le moyen de ressort (5), de telle sorte que ce dernier soit précontraint.

10. Siège de véhicule (1) selon la revendication 9,
**caractérisé en ce qu'**une deuxième butée (15) agit dans une position rentrée de la partie de dossier (3.1, 3.2) sur le moyen de ressort (5), de telle sorte que ce dernier soit précontraint.
